(19) Europäisches Patentamt
European Patent Office
Office européen des brevets

(11) EP 4 787 102 A1

(12) EUROPEAN PATENT APPLICATION

(43) Date of publication:
**05.08.2026 Bulletin 2026/32**

(21) Application number: **26155830.8**

(22) Date of filing: **02.02.2026**

(51) International Patent Classification (IPC):
***G05D 1/20*** *(2024.01)*

(52) Cooperative Patent Classification (CPC):
**G05D 1/6484; G05D 1/2246; G05D 1/2297;**
G05D 2105/10; G05D 2107/23; G05D 2107/40;
G05D 2109/10

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **03.02.2025 IT 202500001968**

(71) Applicant: **Stiga S.p.A.**
**31033 Castelfranco Veneto (TV) (IT)**

(72) Inventors:
- **POZZA, Nicola**
  **31033 Castelfranco Veneto (TV) (IT)**
- **CASAGRANDE, Gianluca**
  **31023 Resana (TV) (IT)**
- **TODESCHINI, Marta**
  **35030 Rubano (PD) (IT)**
- **BONILAURI, Matteo**
  **I-36063 Marostica (VI) (IT)**
- **SCAPIN, Michele**
  **I-36061 Bassano del Grappa (VI) (IT)**

(74) Representative: **PGA S.p.A.**
**Via Mascheroni, 31**
**20145 Milano (IT)**

# (54) METHOD FOR DEFINING A PROFILE OF A WORK AREA IN WHICH A ROBOTIC LAWNMOWER OPERATES AND COMPUTERIZED INFRASTRUCTURE CONFIGURED TO PERFORM SAID METHOD

(57) The present disclosure relates to a method executed by a computerized system for defining a profile of a work area in which a robotic lawnmower operates. The method involves a step of acquiring or receiving an image representative of the work area, and on such image, defining or selecting a first profile (3) of the work area (1). Within the first profile (3), at least one characteristic point (4) corresponding to a distinctive position in the work area is identified. The method further involves determining measured geographic coordinates of the characteristic point. Using the measured geographic coordinates of the characteristic point and the first profile, a second profile 12 of the work area 1 is determined, usable as a reference by the robotic lawnmower during navigation and execution of maintenance operations.

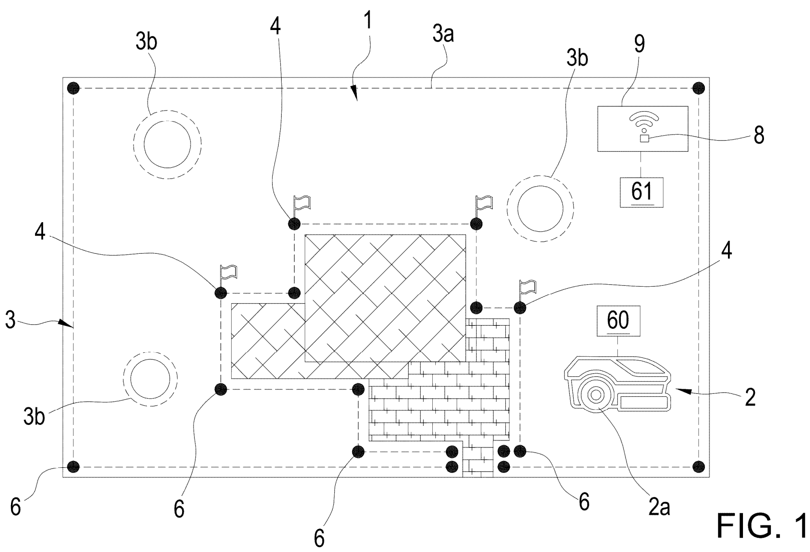


FIG. 1



Processed by Luminess, 75001 PARIS (FR)

## Description

### TECHNICAL FIELD

The present disclosure relates to a method for defining a profile of a work area in which a robotic lawnmower operates and a computerized infrastructure configured to perform such method.

The disclosure may find advantageous application in the field of green space maintenance, particularly for grass mowing, soil tillage, verification of lawn conditions or further agricultural activities.

### BACKGROUND

Apparatus and related methods for controlling autonomous robotic lawnmowers within boundaries delimiting the work area of the robotic lawnmower are known in the gardening and land maintenance field. Traditionally, methods for establishing such boundaries rely on integrated positioning systems that allow the robot to navigate within a predetermined area.

Although the solutions described above utilize positioning technologies to define operational boundaries and allow navigation of autonomous robots within them, the Applicant has found that such solutions exhibit limitations and drawbacks. In particular, defining the mowing perimeter requires complex and laborious procedures that may involve remote piloting of the robot along the perimeter or manual movement of the robot along the perimeter. These methods, although effective, are burdensome and require considerable time commitment from the user. Furthermore, such procedures not only increase the risk of errors in mapping the perimeter due to potential inaccuracies in manual or remote guidance, but are also impractical in environments requiring frequent boundary adjustments following physical modifications to the work area. Consequently, the cited solutions are capable of improvement in certain aspects.

### OBJECT OF THE DISCLOSURE

The purpose of the present disclosure is therefore to solve at least one of the drawbacks and/or limitations of the previous solutions.

A first object of the present disclosure is to provide a method for delimiting operational boundaries for autonomous robots that does not require extensive physical interventions or prolonged manual configurations, thereby reducing initial setup and maintenance time.

It is also an object of the present disclosure to provide a method that increases the precision in defining operational boundaries, minimizing robot navigation errors and improving the efficiency of automated operations.

It is also an object of the present disclosure to provide a method that is easily adaptable to changes in the work area, allowing rapid reconfiguration of operational boundaries without the need for manual reprogramming interventions. These objects and others, which will become more apparent from the following description, are substantially achieved by a method for defining a profile of a work area in which a robotic lawnmower operates and a computerized infrastructure in accordance with one or more of the appended claims and/or the following aspects.

### SUMMARY

Aspects of the invention are described hereinafter.

In a 1st aspect, a method is provided performed by a computerized system (5) for defining a profile of a work area in which a robotic lawnmower (2) operates, said method executing a mapping procedure comprising the steps of:

- acquiring or receiving, optionally from a database, an image representative of the work area (1) in which the robotic lawnmower (2) operates,
- defining or selecting a first profile (3) of the work area (1) on said image, on said first profile (3) being identified or identifiable at least one characteristic point (4) relative to a distinctive position of the work area (1),
- determining, by means of a geolocation system optionally of the robotic lawnmower (2), measured geographic coordinates of the at least one characteristic point (4),
- determining based on the first profile (3) and the measured geographic coordinates of the at least one characteristic point (4), a second profile (12) of the work area (1) usable by the robotic lawnmower (2) as a reference during navigation of the work area (1).

In a 2nd aspect according to the preceding aspect, the step of defining or selecting the first profile (3) of the work area (1) comprises manually delineating, via a user interface (30) of the computerized system (5), a trace representative of a perimeter edge (3a) relating to an external boundary of the work area (1).

In a 3rd aspect according to any one of the two preceding aspects, the step of defining or selecting the first profile (3) of the work area (1) comprises manually delineating, via a user interface (30) of the computerized system (5), a trace representative of one or more internal edges (3b) delimiting respective zones of the work area (1), distinct from the perimeter edge (3a) and internal thereto.

In a 4th aspect according to any one of the preceding aspects, defining or selecting the first profile (3) of the work area (1) comprises selecting or marking a plurality of boundary points (6) representative of respective positions of the work area (1).

In a 5th aspect according to the preceding aspect, defining or selecting the first profile (3) of the work area (1) further comprises delineating a closed path connecting each boundary point (6) and the characteristic point (4) to one another.

In a 6th aspect according to any one of the preceding aspects, defining or selecting the first profile (3) of the work area (1) comprises a step of manually selecting or marking, via a/the user interface (30) of the computerized system (5), the at least one characteristic point (4) of the first profile (3).

In a 7th aspect according to any one of the preceding aspects, the mapping procedure comprises assigning to the characteristic point (4) the geographic coordinates measured via the geolocation system.

In an 8th aspect according to any one of the preceding aspects, the first profile (3) comprises information relating to an estimate of geographic coordinates of the characteristic point (4) derivable from the image representative of the work area (1).

In a 9th aspect according to the preceding aspect, the mapping procedure further comprises a step of calculating an offset value as a difference between the measured geographic coordinates of the characteristic point (4) and the estimated geographic coordinates of the characteristic point (4).

In a 10th aspect according to the preceding aspect, the step of determining the second profile (12) comprises translating the first profile (3) as a function of the offset value and the characteristic point (4).

In an 11th aspect according to any one of the two preceding aspects, the second profile (12) comprises information relating to geographic coordinates of the characteristic point (4) taking into account the offset value.

In a 12th aspect according to any one of the two preceding aspects, translating the first profile (3) comprises adding the offset value to the estimated geographic coordinates of the same characteristic point (4).

In a 13th aspect according to any one of the three preceding aspects, translating the first profile (3) comprises adding the offset value to respective estimated geographic coordinates of each boundary point (6).

In a 14th aspect according to any one of the preceding aspects when dependent on the 8th aspect, the estimated geographic coordinates of the characteristic point (4) are determined by respective estimated values of latitude ($Lat_s$) and longitude ($Long_s$).

In a 15th aspect according to any one of the preceding aspects when dependent on the 8th aspect, the measured geographic coordinates of the characteristic point (4) are determined by respective measured values of latitude ($Lat_m$) and longitude ($Long_m$).

In a 16th aspect according to any one of the preceding aspects when dependent on the 9th aspect, the offset value is representative of respective geographic coordinates determined by respective values of latitude ($Lat_{offset}$) and longitude ($Long_{offset}$).

In a 17th aspect according to the three preceding aspects, calculating a difference between the measured geographic coordinates of the characteristic point (4) and the estimated geographic coordinates of the characteristic point (4) involves:

- determining the latitude value ($Lat_{offset}$) of the offset value as the difference between the measured latitude value ($Lat_m$) and the estimated latitude value ($Lat_s$) of the characteristic point (4),
- determining the longitude value ($Long_{offset}$) of the offset value as the difference between the measured longitude value ($Long_m$) and the estimated longitude value ($Long_s$) of the characteristic point (4).

In an 18th aspect according to any one of the two preceding aspects, the latitude value ($Lat_{offset}$) of the offset value is determined using the following formula:

$$Lat_{offset} = Lat_m - Lat_s \ ,$$

In a 19th aspect according to any one of the three preceding aspects, the longitude value ($Long_{offset}$) of the offset value is determined using the following formula:

$$Long_{offset} = Long_m - Long_s \ .$$

In a 20th aspect according to any one of the preceding aspects, the robotic lawnmower (2) comprises a geolocation device (7).

In a 21st aspect according to the preceding aspect, determining the measured geographic coordinates of the characteristic point (4) comprises:

- placing the robotic lawnmower (2) in the position of the work area (1) coincident with the characteristic point (4),
- determining the measured geographic coordinates of the characteristic point (4) via the geolocation device (7) of the robotic lawnmower (2).

In a 22nd aspect according to the preceding aspect, placing the robotic lawnmower (2) in the position of the work area (1) coinciding with the characteristic point (4) comprises:

- aligning a reference zone (10) of the robotic lawnmower (2) defined by a midpoint point between two wheels of the same robotic lawnmower (2), with the position of the work area (1) coinciding with the characteristic point (4).

In a 23rd aspect according to the preceding aspect, the reference zone (10) of the robotic lawnmower (2) is located on an axle connecting two wheels (11) of the robotic lawnmower (2) to one another.

In a 24th aspect according to any one of the two preceding aspects, the mapping procedure further comprises a step of determining or retrieving, optionally from a memory unit of the robotic lawnmower (2), a positional deviation value representative of a distance between the reference zone (10) and a position of the geolocation device (7) on the robotic lawnmower (2).

In a 25th aspect according to the preceding aspect, determining the measured geographic coordinates of the characteristic point (4) is a function of the positional deviation value.

In a 26th aspect according to any one of the two preceding aspects, the positional deviation value is defined by cartesian coordinates calculated with respect to a cartesian reference system having the reference zone (10) as its origin.

In a 27th aspect according to any one of the three preceding aspects, determining the measured geographic coordinates of the characteristic point (4) comprises adding the positional deviation value to geographic coordinates detected by the geolocation device (7) of the robotic lawnmower (2).

In a 28th aspect according to any one of the preceding aspects, the image representative of the work area (1) comprises, for each boundary point (6), information relating to respective estimates of geographic coordinates defined as absolute type estimated geographic coordinates, which identify respective positions of the work area (1) independently of the estimated geographic coordinates of the characteristic point (4).

In a 29th aspect according to the preceding aspect, for each boundary point (6) having information relating to absolute type geographic coordinates, the step of translating the first profile (3) comprises adding the offset value to respective absolute type estimated geographic coordinates of each boundary point (6).

In a 30th aspect according to any one of the preceding aspects from the 1st to the 27th, the image representative of the work area (1) comprises, for each boundary point (6), information relating to respective estimates of geographic coordinates defined as relative type estimated geographic coordinates, which identify respective positions of the work area (1) in relation to the estimated geographic coordinates of the characteristic point (4).

In a 31st aspect according to any one of the preceding aspects, the step of defining or selecting the profile of the work area (1) is executed prior to or subsequent to the step of determining the measured geographic coordinates of the characteristic point (4).

In a 32nd aspect according to any one of the preceding aspects, on said first profile (3) are identified or identifiable a plurality of characteristic points relative to respective distinctive positions of the work area (1).

In a 33rd aspect according to the preceding aspect, the mapping procedure comprises the steps of:

- determining, by means of the geolocation system optionally of the robotic lawnmower (2), measured geographic coordinates of each characteristic point (4) of said plurality,
- calculating, for each characteristic point (4), a characteristic deviation value as the difference between the measured geographic coordinates of a respective characteristic point (4) and the estimated geographic coordinates of the same characteristic point (4),
- calculating the offset value as the arithmetic mean of the deviation values.

In a 34th aspect according to any one of the preceding aspects, the robotic lawnmower (2) is configured to communicate with a reference station (9) positioned within or in proximity to the work area (1), said reference station (9) comprising a respective geolocation device (8).

In a 35th aspect according to the preceding aspect, the method further comprises a step of executing the mapping procedure periodically or when a displacement of the reference station (9) is detected.

In a 36th aspect according to any one of the preceding aspects, the mapping procedure comprises a step of displaying, via the user interface (30) of the computerized system (5), the image representative of the work area (1).

In a 37th aspect according to any one of the preceding aspects, the mapping procedure comprises a step of displaying, via the user interface (30) of the computerized system (5), the first and/or the second profile (12) of the work area (1).

In a 38th aspect according to any one of the preceding aspects, the mapping procedure comprises a step of displaying, via the user interface (30) of the computerized system (5), the/each characteristic point (4).

In a 39th aspect according to any one of the preceding aspects, the mapping procedure comprises a step of displaying, via the user interface (30) of the computerized system (5), each boundary point (6) of said plurality.

In a 39bis aspect according to any one of the preceding aspects, the mapping procedure comprises a step of commanding the robotic lawnmower (2) to perform maintenance operations in the work area (1) delimited by the second profile (12).

In a 40th aspect according to any one of the preceding aspects, the mapping procedure comprises displaying, via the user interface (30) of the computerized system (5), the/each characteristic point (4) of the first profile (3) and of the second profile (12) of the work area (1) with a marker different from a marker representative of each boundary point (6) of said plurality.

In a 41st aspect, a computerized infrastructure configured to execute the method according to any one of the preceding aspects is provided.

In a 42nd aspect according to the preceding aspect, the computerized infrastructure comprises:

- a computerized system (5) comprising a control unit configured to:
  - acquire or receive, optionally from a database, an image representative of a work area (1),
  - receive a first profile (3) of the work area (1) on said image, on said first profile (3) being identified or identifiable at least one characteristic point (4) relative to a distinctive position of the work area (1),
  - receive, from a geolocation system, measured geographic coordinates of the at least one characteristic point (4),
- a robotic lawnmower (2) comprising a controller (60) connected to the computerized system (5) and configured to receive or calculate a second profile (12) of the work area (1) obtained starting from the first profile (3) and from the measured geographic coordinates of the at least one characteristic point (4), said second profile (12) being usable by the robotic lawnmower (2) as a reference during navigation in the work area (1).

In a 43rd aspect according to the preceding aspect, the control unit (50) of the computerized system (5) is configured to determine the second profile (12) of the work area (1) based on the first profile (3) and the measured geographic coordinates of the at least one characteristic point (4).

In a 44th aspect according to any one of the two preceding aspects, the control unit (50) of the computerized system (5) is configured to transmit the second profile (12) to the controller (60) of the robotic lawnmower (2).

In a 45th aspect according to any one of the three preceding aspects, the controller (60) of the robotic lawnmower (2) is configured to receive the second profile (12) from the control unit of the computerized system (5).

In a 46th aspect according to any one of the four preceding aspects, the computerized system (5) comprises a user interface (30) configured to allow a user to select or manually trace the profile of the work area (1).

In a 47th aspect according to the preceding aspect, the control unit of the computerized system (5) is connected to the user interface (30) and comprises a memory configured to store:

- a plurality of first profiles of the work area (1) selectable by the user, and/or
- the first profile (3) manually traced by the user via the user interface (30).

In a 48th aspect according to any one of the preceding aspects from the 42nd to the 47th, the control unit of the computerized system (5) is configured to assign to the characteristic point (4) the measured geographic coordinates via the geolocation system.

In a 49th aspect according to any one of the preceding aspects from the 42nd to the 47th, the first profile (3) comprises information relating to an estimate of geographic coordinates of the characteristic point (4) derivable from the image representative of the work area (1).

In a 50th aspect according to the preceding aspect, the control unit of the computerized system (5) is configured to calculate an offset value as a difference between the measured geographic coordinates of the characteristic point (4) and the estimated geographic coordinates of the characteristic point (4).

In a 51st aspect according to the preceding aspect, the control unit of the computerized system (5) is further configured to determine the second profile (12) of the work area (1) by translating the first profile (3) as a function of the offset value and the characteristic point (4).

In a 52nd aspect according to any one of the preceding aspects from the 42nd to the 51st, the robotic lawnmower (2) comprises a geolocation device (7) configured to generate a signal representative of geographic coordinates of the characteristic point (4).

In a 53rd aspect according to the preceding aspect, the controller (60) of the robotic lawnmower (2) is connected to the geolocation device (7) and configured to:

- receive the signal representative of geographic coordinates of the characteristic point (4),
- determine measured geographic coordinates of the characteristic point (4) based on the signal received from the geolocation device (7).

In a 54th aspect according to the preceding aspect, the controller (60) of the robotic lawnmower (2) is configured to transmit the measured geographic coordinates of the characteristic point (4) to the control unit (50) of the computerized system (5).

In a 55th aspect according to any one of the preceding aspects from the 42nd to the 54th, the computerized infrastructure comprises a reference station (9) positioned within or in proximity to the work area (1) and configured to communicate with the robotic lawnmower (2).

In a 56th aspect according to the preceding aspect, the reference station (9) comprises a respective geolocation device (8) configured to detect geographic coordinates representative of a position of the same reference station.

In a 57th aspect according to the preceding aspect, the reference station (9) further comprises a controller (61) connected to the control unit (50) of the computerized system (5) and configured to transmit to the latter the geographic coordinates relating to the position of the reference station.

In a 58th aspect according to any one of the preceding aspects from the 42nd to the 57th, the computerized system (5) comprises at least one of: a smartphone, a tablet, a personal computer and a remote server.

In a 59th aspect, a computerized system (5) is provided for defining a profile of a work area (1) in which a robotic lawnmower (2) operates.

In a 60th aspect according to the preceding aspect, the computerized system (5) comprises a control unit (50) configured to:

- acquire or receive, optionally from a database, an image representative of a work area (1),
- define or select a first profile (3) of the work area (1) on said image, on said first profile (3) being identified or identifiable at least one characteristic point (4) relative to a distinctive position of the work area (1),
- receive, from a geolocation system, measured geographic coordinates of the at least one characteristic point (4). In a 61st aspect according to the preceding aspect, the control unit (50) of the computerized system (5) is configured to determine the second profile (12) of the work area (1) based on the first profile (3) and the measured geographic coordinates of the at least one characteristic point (4).

In a 62nd aspect according to any one of the two preceding aspects, the computerized system comprises a user interface (30) configured to allow a user to select or manually trace the profile of the work area (1).

In a 63rd aspect according to the preceding aspect, the control unit of the computerized system (5) is connected to the user interface (30) and comprises a memory configured to store a plurality of first profiles of the work area (1) selectable by the user.

In a 64th aspect according to any one of the two preceding aspects, the control unit of the computerized system (5) is connected to the user interface (30) and comprises a memory configured to store the first profile (3) manually traced by the user via the user interface (30).

In a 65th aspect according to any one of the preceding aspects from the 60th to the 64th, the control unit is configured to assign to the characteristic point (4) the measured geographic coordinates via the geolocation system.

In a 66th aspect according to any one of the preceding aspects from the 60th to the 64th, the first profile (3) comprises information relating to an estimate of geographic coordinates of the characteristic point (4) derivable from the image representative of the work area (1).

In a 67th aspect according to the preceding aspect, the control unit is configured to calculate an offset value as a difference between the measured geographic coordinates of the characteristic point (4) and the estimated geographic coordinates of the characteristic point (4).

In a 68th aspect according to the preceding aspect, the control unit is configured to determine the second profile (12) of the work area (1) by translating the first profile (3) as a function of the offset value and the characteristic point (4).

In a 69th aspect, a robotic lawnmower (2) configured to cooperate with the computerized system according to any one of the preceding aspects from the 59th to the 68th is provided, for defining a profile of a work area (1) in which a robotic lawnmower (2) operates.

In a 70th aspect according to the preceding aspect, the robotic lawnmower comprises a controller (60) connected to the computerized system (5) and configured to receive or calculate a second profile (12) of the work area (1) obtained starting from the first profile (3) and from the measured geographic coordinates of the at least one characteristic point (4).

In a 71st aspect according to the preceding aspect, the second profile (12) is usable by the robotic lawnmower (2) as a reference during navigation in the work area (1).

In a 72nd aspect according to any one of the two preceding aspects, the controller (60) is configured to receive the second profile (12) from the control unit (50) of the computerized system (5).

In a 73rd aspect according to any one of the three preceding aspects, the robot comprises a geolocation device (7) configured to generate a signal representative of geographic coordinates of the characteristic point (4).

In a 74th aspect according to the preceding aspect, the controller (60) is connected to the geolocation device (7) and configured to:

- receive the signal representative of geographic coordinates of the characteristic point (4),
- determine measured geographic coordinates of the characteristic point (4) based on the signal received from the geolocation device (7).

In a 75th aspect according to the preceding aspect, the controller (60) is further configured to transmit the measured geographic coordinates of the characteristic point (4) to the control unit (50) of the computerized system (5).

## BRIEF DESCRIPTION OF THE DRAWINGS

Some embodiments and some aspects of the disclosure will be described hereinafter with reference to the accompanying drawings, provided for illustrative purposes only and therefore not limiting, in which:

- Figure 1 is a schematic view of a work area in which a robotic lawnmower operates;
- Figures 2 and 3 are schematic views of a user interface of a computerized system configured to execute a method in accordance with the present disclosure;

- Figure 4 is a schematic view of the work area of Figure 1 representative of a step of the method in accordance with the present disclosure, aimed at determining measured geographic coordinates of a characteristic point of the work area;
- Figure 5 is a further schematic view of a user interface of the computerized system configured to execute a method in accordance with the present disclosure;
- Figure 6 shows a connection diagram between a robotic lawnmower and a computerized system configured to execute a method in accordance with the present disclosure;
- Figures 7-10 show block diagrams relating to the steps of the method in accordance with the present disclosure.

## DEFINITIONS AND CONVENTIONS

It should be noted that in the present detailed description, corresponding parts illustrated in the various figures are indicated with the same numerical references. The figures may illustrate the subject matter of the disclosure through non-scale representations; therefore, parts and components illustrated in the figures relating to the subject matter of the disclosure may relate exclusively to schematic representations.

## CONTROL UNIT

The robotic lawnmower and the computerized system described and claimed herein comprise/use respectively at least one control unit and a controller, responsible for controlling operating conditions implemented by the same robotic lawnmower or computerized system and/or for controlling the process steps.

The control unit or controller may be a single unit or be formed by a plurality of distinct control units depending on design choices and operational requirements.

By control unit is meant an electronic type component which may comprise at least one of: a digital processor (CPU), an analog type circuit, or a combination of one or more digital processors with one or more analog type circuits. The control unit may be "configured" or "programmed" to perform certain steps: this may be achieved in practice by any means that allows configuring or programming the control unit. For example, in the case of a control unit comprising one or more CPUs and one or more memories, one or more programs may be stored in appropriate memory banks connected to the CPU or CPUs; the program or programs contain instructions which, when executed by the CPU or CPUs, program or configure the control unit to perform the operations described in relation to the control unit. Alternatively, if the control unit is/or comprises analog type circuitry, then the control unit circuit may be designed to include circuitry configured, in use, to process electrical signals so as to perform the steps relating to the control unit. Parts of the process described herein may be implemented by means of a data processing unit, or control unit, technically replaceable with one or more electronic processors designed to execute a portion of software or firmware program loaded on a memory medium. Such software program may be written in any known type of programming language. The electronic processors, if numbering two or more, may be connected to one another by means of a data connection such that their computing powers are shared in any manner; the same electronic processors may therefore be installed in positions that are also geographically different, implementing by means of the aforementioned data connection a distributed computing environment. The data processing unit, or control unit, may be a general purpose type processor configured to execute one or more parts of the process identified in the present disclosure through the software or firmware program, or be an ASIC or dedicated processor or an FPGA, specifically programmed to execute at least part of the operations of the process described herein. The memory medium may be non-transitory and may be internal or external to the processor, or control unit, or data processing unit, and may, specifically, be a memory geographically located remotely with respect to the electronic processor. The memory medium may also be physically divided into multiple portions, or in the form of cloud, and the software or firmware program may be stored on portions of memory geographically divided from one another.

## DETAILED DESCRIPTION

The present disclosure relates to a method for defining a profile of a work area 1 in which a robotic lawnmower 2 operates, as well as a computerized infrastructure configured to execute such method. As will appear in the continuation of the description, the method allows defining the boundaries and operational areas of the robotic lawnmower, without requiring extensive manual interventions or complex initial configurations. In particular, the profile of the work area 1 may comprise a perimeter edge 3a surrounding structures such as buildings or dwellings and/or one or more internal edges 3b delimiting specific zones within the work area, such as areas excluded from mowing, for example zones with trees or swimming pools, paths connecting different areas or other reference points useful for the correct operation of the robot. Both the perimeter edge 3a and the internal edges 3b are defined by means of a plurality of points, each of which is associated with respective geographic coordinates that identify its position within the work area 1 and allow the robotic lawnmower 2 to perform maintenance operations in compliance with the established boundaries.

In this regard, the method described herein addresses an issue related to the use of mapping services, such as Google Maps, for defining the profile of the work area 1. In particular, the images provided by such services are two-dimensional projections of a three-dimensional terrestrial surface, obtained by projecting the image onto a spherical model. This projection process may introduce discrepancies between the estimated geographic coordinates, associated with the positions depicted in the image, and the actual geographic coordinates of the same positions on the ground. Consequently, a first profile 3 traced on such image inherits such estimated coordinates, which may not precisely correspond to the actual geographic coordinates of the work area 1. The method that is the subject of the present disclosure therefore provides a series of steps aimed at overcoming this limitation, generating a second profile 12 which, starting from the first profile 3 with estimated coordinates, presents corrected geographic coordinates corresponding to the actual positions of the work area 1.

The description that follows presents a structure articulated in four main sections involving the description of the robotic lawnmower, a computerized system 5 that interacts with the robotic lawnmower that contributes to the execution of the method, the various steps that make up the method for defining the profile of the work area 1 and subsequently a computerized infrastructure where it is further specified which steps of the method are executed by the robot and which by the computerized system.

**Robotic lawnmower and reference station**

The present description refers to a robotic lawnmower 2 configured to perform maintenance operations within a work area 1 of a terrain, for example a lawn, a garden or agricultural land. The robotic lawnmower 2, schematically represented within a work area 1 in Figures 1 and 4, may be a self-driving device comprising movement means for determining the displacement of the robot within the profile of the work area. The movement means may comprise drive wheels 2a and idler wheels, or tracks, to allow the robotic lawnmower 2 to advance on the terrain. The robotic lawnmower 2 may comprise one or more electric motors connected to a controller 60 and to the drive wheels 2a or tracks, to determine the forward motion of the robotic lawnmower 2. The electric motor or each electric motor may have a rated power comprised between 500 W and 6000 W, in particular between 700 W and 4500 W.

The robotic lawnmower 2 may comprise one or more sensors for autonomously moving within the work area 1, such as for example proximity sensors and/or a video camera. In particular, the robotic lawnmower 2 may comprise a geolocation device 7, for example a GPS, configured to detect the geographic coordinates of each position assumed by the robotic lawnmower 2 within the work area 1. The geolocation device 7 is connected to the controller 60 and configured to transmit to the latter signals representative of the detected geographic coordinates, allowing the controller 60 to determine the position of the robotic lawnmower 2 during its movement and to command the movement means accordingly. As will be described in greater detail below, the profile of the work area 1 may comprise a plurality of characteristic points 4, corresponding to distinctive positions of the work area 1 easily identifiable by the user on the terrain. The geolocation device 7 of the robotic lawnmower 2 may be employed to detect the measured geographic coordinates of such characteristic points 4, which are transmitted to the controller 60 and subsequently used for defining the profile of the work area 1 according to the method that is the subject of the present disclosure. The controller 60 of the robotic lawnmower 2 is connected to the geolocation device 7 and is configured to receive the signal representative of geographic coordinates of the characteristic point 4, based on which it determines the measured geographic coordinates of a relative characteristic point 4.

The robotic lawnmower 2 comprises at least one cutting tool, for example a blade, configured to perform the maintenance operations in the work area 1 under the action of an electric motor, optionally the same motor of the movement means. The controller 60 may be connected to the electric motor of the cutting tool to command its activation or deactivation as a function of the operating conditions of the robot.

In one embodiment, the robotic lawnmower 2 comprises a single motor, optionally electric, connected to the cutting tool and to the movement means. Alternatively, the robotic lawnmower 2 may comprise a motor, optionally electric, connected to the cutting tool, and a further motor, optionally electric, connected to the movement means.

In a further embodiment, the robotic lawnmower 2 is an electrically powered device, in which the movement means and the cutting tool are driven by means of an electric motor powered by an on-board battery, which may be a rechargeable battery having a charge capacity comprised between 2 Ah and 60 Ah. The battery may be configured to deliver a voltage preferably comprised between 24 V and 48 V. In greater detail, the battery may be configured to deliver a current comprised between 1 A and 60 A. The battery may be a battery rechargeable by means of a power socket of a domestic network, for example a 110V, 200V or 380V current source.

The robotic lawnmower 2 may be connected to a reference station 9 equipped with a respective geolocation device 8, configured to detect the geographic coordinates of the station itself. The reference station 9 further comprises a controller 61 connected to the controller 60 of the robotic lawnmower 2, configured to transmit the geographic coordinates detected by the geolocation device 8 of the reference station 9 to the controller 60 of the robotic lawnmower 2. The connection between the reference station 9 and the robotic lawnmower 2 allows implementing GPS-RTK technology.

This technology allows correcting in real time the positioning errors of the geolocation device 7 of the robotic lawnmower 2 by means of comparison between the data detected by the geolocation device 8 of the reference station 9 and those detected by the geolocation device 7 of the robotic lawnmower 2, thereby improving the positioning accuracy of the robotic lawnmower 2 in the work area 1.

## Computerized system

A computerized system 5 is described below which, in cooperation with the robotic lawnmower 2, contributes to the execution of the method relating to the definition of the profile of the work area 1.

The computerized system 5 may comprise a computing device 13 identifiable as a smartphone, a tablet or a personal computer, which may interact directly with the robotic lawnmower to perform the activities necessary for defining and storing the profile of the work area 1. In this context, the computing device 13 may have a control unit 50 configured to perform the steps of the method relating to the definition of a mowing profile as subsequently detailed. The computing device 13 may connect to the robotic lawnmower 2 to exchange information with the latter. This connection may occur via a wireless network, for example GPRS, 4G, 5G, WiFi or other communication protocols, allowing the computing device 13 to send and receive data in real time during the execution of the method.

The computing device 13 may also have a local memory for storing information relating to the profile of the work area 1.

The computing device 13 may also have a user interface 30 that allows the user to interact with the device itself to view information or enter their own preferences relating to the profile of the work area 1. In an example, the user interface 30 may allow the user to enter preferences and parameters relating to the definition of the profile of the work area 1, which will be referred to in the continuation of the description as first profile 3, selecting or setting a perimeter edge 3a that defines the operational boundaries of the robotic lawnmower 2, as well as internal edges 3b that define zones not involved in mowing and/or the paths to follow.

The computing device 13 may also have a screen for showing the user the profile of the work area 1 created based on the user's inputs (see Figures 2, 3 and 5).

In an example, the computing device 13 may be used as the main tool for interaction with the user and the robotic lawnmower 2, managing the definition of the first profile 3. The user, through the user interface 30, manually traces the profile of the work area 1 and optionally provides further information necessary for managing the operations of the robotic lawnmower 2.

In an embodiment, the computerized system 5 may comprise a cloud platform 14, which for example resides on a remote server and has the function of storing and managing part of the information associated with the definition of the first profile 3 of the work area 1. In this configuration, while the computing device 13 continues to serve as interface between the user and the system, the storage of profiles and related data, such as the geographic coordinates associated with the first profile 3, may be delegated to the cloud platform 14. In this configuration, the cloud platform 14 may also store a second profile 12 subsequently detailed, generated based on the first profile 3 and usable by the robotic lawnmower as reference for performing maintenance activities in the work area 1.

An advantage of adopting the cloud platform 14 is the possibility of storing and processing information in a centralized manner, allowing access from multiple computing devices. In this context, the cloud platform 14 may be employed together with the computing device 13 or may be employed in support of the computing device 13 for performing the subsequently detailed method steps. In the latter case, the cloud platform may comprise the control unit 50 for executing steps of the method, such as the calculation and/or storage of the subsequently detailed second profile 12, generated on the basis of the first profile 3 and geographic information of the work area 1, for example associated with the characteristic point 4. Once generated, the second profile 12 may be transferred from the cloud platform 14 to the computing device 13 or directly to the robotic lawnmower 2. The cloud platform 14 may therefore be connected to the robotic lawnmower 2 to exchange information with the latter. This connection may occur via a wireless network, for example GPRS, 4G, 5G, WiFi or other communication protocols, allowing the cloud platform 14 to send and receive data in real time during the execution of the method.

## Method for defining a profile of a work area

With reference to the block diagrams of Figures 7-11, the steps implementing a mapping procedure 100 for defining a profile of the area in accordance with the present disclosure are presented below.

In a step 101 shown in the block diagrams of Figures 7 and 8, the mapping procedure requires acquiring or receiving an image representative of the work area 1. This image may be based on satellite images or maps provided through a mapping service, such as Google Maps or similar services. The image returned by such services represents the area in which the robotic lawnmower 2 will have to operate and associates with each point depicted in the image respective estimated geographic coordinates, for example expressed in terms of latitude and longitude. In other words, to each position visible in the image corresponds a pair of estimated geographic coordinates that identifies its location on the Earth's surface. The acquired image represents the topography of the terrain in which the robot will have to operate, thus being suitable to be used as a basis for defining the profile of the work area 1. Alternatively, the image representative of the work area 1 may be a photograph of the terrain to be maintained, for example obtained via a drone. In this alternative, the image is devoid of information relating to the geographic coordinates of the depicted positions.

Subsequently, the mapping procedure may comprise, in a step 102, the definition or selection of a first profile 3 of the work area 1 on the acquired image. In this step, the user is called upon to manually trace the first profile 3 of the area in which the robotic lawnmower 2 will operate. From the graphical point of view and as shown in Figure 1, the first profile 3 presents itself as a closed path comprising a perimeter edge 3a representative of an external boundary of the work area, as well as one or more internal edges 3b delimiting respective zones of the work area 1 internal to the perimeter edge 3a. The internal edges 3b may for example delimit zones not intended for grass cutting or obstacles to be avoided (see for example steps 102a and 102b of the block diagram of Figure 9).

As shown in Figure 2, the step of defining the first profile 3 may occur through a user interface 30 of the computerized system 5, for example of the computing device 13, which allows manually tracing the first profile 3 on the acquired image. The manual trace of the first profile 3 on the image allows minimizing the operations required of the user to make the robotic lawnmower 2 operational. In particular, the system is designed such that, in an exemplary configuration, the profile teaching may be performed directly by a dealer of the robotic lawnmower 2 at the time of sale. In this case, the dealer sets the first profile 3 on behalf of the user, who, as will be described below, will only have to position the robotic lawnmower 2 at the characteristic points 4 to detect their measured geographic coordinates and obtain the second profile 12. In this way, the user avoids errors that could derive from incorrect configuration and the robotic lawnmower 2 is operational without the need for further interventions, except those relating to finalization of the profile.

The first profile 3 may comprise a plurality of boundary points 6, each of which has respective geographic coordinates that identify its position within the work area 1. The boundary points 6 of said plurality may be connected to one another by means of a respective segment, defining a closed path that delineates the perimeter edge 3a and any internal edges 3b.

In an example, the segments connecting consecutive boundary points 6 to one another may be straight segments, conferring on the first profile 3 a polygonal shape having the boundary points 6 as vertices. Each straight segment may be calculated by means of linear interpolation between the geographic coordinates of the two boundary points 6 constituting its extremities.

In a further example, at least some of the segments connecting consecutive boundary points 6 are curved segments calculated by means of geometric rules or interpolation algorithms, such as for example arcs of circle defined by a radius of curvature, Bézier curves defined by control points, or spline curves that interpolate the boundary points 6. In this variant, the geographic coordinates of the boundary points 6, together with the geometric parameters of the curved segments, define the geometry of the first profile 3.

The boundary points 6 are marked in Figures 1, 2 and 4 with a circle-shaped symbol (step 102c of Figure 10).

Each boundary point 6 may be defined by absolute type geographic coordinates, derivable from the image representative of the work area 1 and which identify the respective position on the Earth's surface independently of other points of the first profile 3. Alternatively, each boundary point 6 may be defined by relative type geographic coordinates, which identify the respective position in relation to a reference point, for example a characteristic point 4 as described below.

Among the boundary points 6 of the first profile 3, the user may identify at least one characteristic point 4, optionally a plurality of characteristic points 4. Each characteristic point 4 is a boundary point 6 corresponding to a distinctive position of the first profile 3 easily identifiable by the user on the terrain, for example a corner of the lawn or a recognizable element of the boundary of the work area 1. Each characteristic point 4 is defined by absolute type geographic coordinates that identify it unambiguously on the map and may be manually marked by the user via the user interface 30 of the computerized system 5, for example by means of a graphical indicator such as a flag, so as to distinguish it from the other boundary points 6 (step 102d of Figure 10). In an example shown in Figure 1, the first profile 3 comprises four characteristic points 4 identified with respective flags.

In a further embodiment, rather than manually tracing the first profile 3, the user interface 30 may display a first profile 3 automatically calculated by the computerized system 5 as a function of the perimeter edge 3a surrounding the terrain to be maintained and/or as a function of obstacles detectable from the acquired image. In this context, the user may select the automatically calculated first profile 3 or modify such first profile 3 before proceeding with the subsequent steps of the method.

The mapping procedure has a step 103 of determining, by means of a geolocation system, measured geographic coordinates of the at least one characteristic point 4. This step may be executed according to two alternatives.

In a first alternative, the user pre-marks one or more boundary points 6 as characteristic points 4 on the first profile 3, for example by means of a flag displayed on the user interface 30 of the computerized system 5. Subsequently, the user positions the robotic lawnmower 2 on the terrain in correspondence with each previously marked characteristic point 4 and initiates the measurement of the geographic coordinates via the geolocation device 7 of the robotic lawnmower 2. In this regard, see Figure 3 which shows the user interface 30 of the computing device 13 requesting the user to position the robotic lawnmower 2 at the characteristic point 4.

In a second alternative, the user positions the robotic lawnmower 2 on the terrain in correspondence with a distinctive position of the work area 1, corresponding to a boundary point 6 of the first profile 3, and initiates the measurement of the geographic coordinates via the geolocation device 7. Subsequently, the user marks such boundary point 6 as characteristic point 4 on the first profile 3, associating the measured geographic coordinates with such characteristic point 4. In other words, in this second alternative the user first measures the geographic coordinates of a boundary point 6 and subsequently indicates that such coordinates relate to a characteristic point 4.

If the first profile 3 comprises a plurality of characteristic points 4, the operations described above relating to positioning the robotic lawnmower 2, measuring the geographic coordinates and marking the characteristic point 4, are repeated for each characteristic point 4 of the plurality of characteristic points 4.

It should be noted that in both alternatives described above, the step 103 of determining the measured geographic coordinates of the at least one characteristic point 4 has been indicated as executed subsequent to the step 102 of defining or selecting the first profile 3 of the work area 1.

In an embodiment, the mapping procedure, rather than requiring the user to determine the measured geographic coordinates via the robotic lawnmower 2, may ask the user to manually enter the geographic coordinates of the characteristic point 4 or to measure them by means of a further device, such as for example a smartphone or a tablet. To ensure more precise measurement of the geographic coordinates of the characteristic point 4, the step 103 of determining the measured geographic coordinates of the characteristic point 4 may provide for a sub-step 103a in which the robotic lawnmower 2 is placed in the position of the work area 1 coincident with the characteristic point 4 by aligning or superimposing a reference zone 10 of the robot with the characteristic point 4 (see the block diagram of Figure 10). As shown in Figure 4, the reference zone 10 of the robotic lawnmower 2 may be defined as the intermediate point between the two drive wheels 2a of the robotic lawnmower 2, for example located on an axle connecting the two drive wheels 2a to one another. The alignment of the reference zone 10 with the position of the characteristic point 4 allows establishing with greater accuracy the geographic coordinates of the characteristic point 4 using the geolocation device 7 of the robotic lawnmower 2.

The geolocation device 7 may be positioned on the robotic lawnmower 2 in a position distanced from the reference zone 10. In this case, the step 103 of determining the measured geographic coordinates of the characteristic point 4 may comprise a further sub-step 103b in which a positional deviation value is determined or retrieved, optionally from a memory unit of the robotic lawnmower 2, representing the distance between the reference zone 10 and the position of the geolocation device 7 on the robotic lawnmower 2. In an example, the positional deviation value may be defined by cartesian coordinates calculated with respect to a cartesian reference system having the reference zone 10 of the robotic lawnmower 2 as its origin. The determination of the measured geographic coordinates of the characteristic point 4 is therefore a function of the positional deviation value, which allows a correction of the coordinates detected by the geolocation device 7 such as to achieve a positioning error of the robotic lawnmower 2 of less than 50 cm, optionally less than 10 cm.

Once the measured geographic coordinates of the at least one characteristic point 4 have been determined, the mapping procedure proceeds with the execution of the subsequent steps for determining the second profile 12 of the work area 1. The second profile 12 is a profile of the work area 1 in which the estimated geographic coordinates of the boundary points 6 of the first profile 3 are replaced by corrected geographic coordinates, calculated based on the measured geographic coordinates of the at least one characteristic point 4.

In a first configuration, if the image representative of the work area 1 is a photograph devoid of geolocation information, for example a photograph acquired via a drone, the mapping procedure involves a step 104 of assigning to the characteristic point 4 the measured geographic coordinates via the geolocation device 7 (see the block diagram of Figure 7). Starting from such measured geographic coordinates, the mapping procedure derives the geographic coordinates of the remaining boundary points 6 of the second profile 12 keeping unchanged the relative positions between the characteristic point 4 and the boundary points 6 as defined in the first profile 3. In other words, the distances and directions between the characteristic point 4 and each boundary point 6, originally defined in the first profile 3, are preserved and applied to the measured geographic coordinates of the characteristic point 4 to calculate the corrected geographic coordinates of each boundary point 6. In this way, the second profile 12 is constructed starting from the measured position of the characteristic point 4, ensuring that the second profile 12 reflects the geometry of the work area 1 (step 107 of Figure 7). The second profile 12 may then be transmitted to the robotic lawnmower 2 to perform the maintenance operations.

In a second configuration, with reference to the block diagram of Figure 8, if the image representative of the work area 1 is a satellite image or a map provided through a mapping service, for example Google Maps, the image includes estimated geographic coordinates associated with each depicted point. However, as described in the introductory part of the present description, such estimated geographic coordinates may present discrepancies with respect to the actual geographic coordinates of the corresponding positions on the ground. In this case, the mapping procedure may provide for a step 105 of calculating an offset value between the estimated geographic coordinates of the characteristic point 4 deriving from the image and the measured geographic coordinates of the same characteristic point 4 detected via the geolocation device 7. The offset value represents the discrepancy between the estimated position and the measured position of the characteristic point 4 and may be expressed as a difference of latitude and longitude.

The offset value is used to translate the first profile 3 and obtain the second profile 12, correcting the discrepancies between the estimated and actual geographic coordinates. The second profile 12 therefore represents a corrected version of the first profile 3, in which the estimated geographic coordinates have been replaced by corrected geographic coordinates based on the measurements made via the geolocation device 7 of the robotic lawnmower 2. The translation operation of the first profile 3 ensures that the robotic lawnmower 2 can navigate in the work area 1 precisely, avoiding positioning errors that could compromise the effectiveness of the maintenance operations.

The translation of the first profile 3 may involve modifying the estimated geographic coordinates of one or more characteristic points of the first profile 3 by adding the offset value calculated from the difference between the measured and estimated coordinates of the characteristic point 4. In particular, the offset value is determined separately for the latitude and longitude of the characteristic point 4.

To calculate the latitude value $Lat_{offset}$ of the offset value, the difference between the measured latitude value $Lat_m$ and the estimated latitude value $Lat_s$ of the characteristic point 4 is determined, using the following formula:

$$Lat_{offset} = Lat_m - Lat_s \ .$$

Similarly, the longitude offset value $Long_{offset}$ of the offset value is calculated as the difference between the measured longitude value $Long_m$ and the estimated longitude value $Long_s$ of the characteristic point 4 using the following formula:

$$Long_{offset} = Long_m - Long_s \ .$$

Once the offset value has been calculated, the translation of the first profile 3 to obtain the second profile 12 may be executed according to two embodiment, depending on how the geographic coordinates of the boundary points 6 of the first profile 3 are defined.

In a first embodiment, in which the boundary points 6 of the first profile 3 are defined by relative type geographic coordinates with respect to the at least one characteristic point 4, the translation involves applying the offset value solely to the at least one characteristic point 4, adding the latitude offset value and the longitude offset value to the respective estimated geographic coordinates of the characteristic point 4. Since the geographic coordinates of the boundary points 6 are defined in relation to the geographic coordinates of the characteristic point 4, the translation of the characteristic point 4 automatically determines the translation of the boundary points 6 and, consequently, also of the segments connecting consecutive boundary points 6 to one another, as such segments are calculated starting from the geographic coordinates of the boundary points 6.

In a second embodiment, in which the boundary points 6 of the first profile 3 are defined by absolute type geographic coordinates, the translation provides for applying the offset value to each point of the first profile 3. In particular, the latitude offset value and the longitude offset value are added to the respective estimated geographic coordinates of the at least one characteristic point 4 and of each boundary point 6, obtaining the corrected geographic coordinates of the corresponding points of the second profile 12. Also in this variant, the segments connecting consecutive boundary points 6 to one another are automatically translated, as they are calculated starting from the relative geographic coordinates of the boundary points 6 of the second profile 12.

The second profile 12 thus obtained may be saved in a memory unit of the controller 60 of the robotic lawnmower 2 to be used as reference for navigation within the work area 1.

In an embodiment, the offset value may be calculated as a function of a discrepancy between the estimated geographic coordinates and the measured geographic coordinates of a plurality of characteristic points 4. In this configuration shown in Figures 1, 2 and 4, a plurality of characteristic points is considered, each of which may be associated with estimated geographic coordinates, derived from the image representative of the work area 1, and with measured geographic coordinates, obtained via the geolocation system, for example, of the robotic lawnmower 2. For each characteristic point 4, a characteristic deviation value is calculated that represents the difference between the measured coordinates and the estimated coordinates. Once the characteristic deviation value has been calculated for each characteristic point 4, the mapping procedure may involve determining the offset value as the arithmetic mean of the deviation values calculated for all characteristic points. This offset value is then used to translate the entire first profile 3, correcting the discrepancies between the estimated and measured coordinates, and thus obtaining the second profile 12.

Also in this embodiment with plurality of characteristic points 4, the translation of the first profile 3 is executed according to the previously described modalities depending on the type of geographic coordinates of the boundary points 6. If the boundary points 6 are defined by relative type geographic coordinates with respect to the characteristic points 4, the translation involves applying the offset value to the plurality of characteristic points 4, automatically determining the translation of the boundary points 6 and the segments connecting them. If, on the other hand, the boundary points 6 are defined by absolute type geographic coordinates, the translation involves applying the offset value both to the plurality of characteristic points 4 and to each boundary point 6 of the first profile 3.

The translation based on the measured geographic coordinates of the first profile 3 determines the definition of the second profile 12 (step 106 of Figure 8), which is stored and sent to the robotic lawnmower 2. The robot, which now has a corrected profile, is ready to perform its maintenance task, such as mowing grass or other planned operations, without the need for further interventions by the user.

Once the second profile 12 has been determined, the mapping procedure may continue with the definition of further internal edges 3b, additional to those possibly already comprised in the perimeter edge 3a of the second profile 12. If the user wishes to add such new internal edges 3b after having completed the generation of the second profile 12, for example to delimit new zones excluded from mowing or to define further obstacles, the geographic coordinates of the points defining such further internal edges 3b are automatically calculated by applying the previously determined offset value. In this way, it is not necessary to repeat the procedure for measuring the geographic coordinates via the robotic lawnmower 2, nor to recalculate the offset value for each further internal edge 3b, ensuring consistency in the geographic coordinates of the entire work area 1 and simplifying the addition of new elements to the second profile 12. The mapping procedure may further comprise a step 108 of displaying, via the user interface 30 of the computerized system 5, for example of the computing device 13, the second profile 12. In an embodiment, the step of displaying the second profile may comprise showing the second profile 12 superimposed on or alongside the first profile 3. In this way, the user may view the second profile 12 translated with respect to the first profile 3, allowing visual verification of the correction made to the geographic coordinates.

The mapping procedure may further comprise a step 109 of commanding the robotic lawnmower 2 to perform maintenance operations in the work area 1 delimited by the second profile 12. In this step, the second profile 12 is transmitted to the controller 60 of the robotic lawnmower 2, which uses the corrected geographic coordinates of the second profile 12 as reference for navigation and execution of maintenance operations within the work area 1.

**Computerized infrastructure**

A computerized infrastructure configured to execute the method in accordance with the description reported above and/or in accordance with any one of the appended claims is also the subject of the present disclosure.

The computerized infrastructure comprises a computerized system 5 that collaborates with a robotic lawnmower 2 for managing the mapping and navigation process of the robot itself.

As mentioned previously and with reference to Figure 6, the computerized system 5 may include a computing device 13 through which the user interacts, and optionally a cloud platform 14 that serves as intermediary in communication between the mobile device and the robotic lawnmower 2. In a configuration in which the computerized system 5 comprises solely the computing device 13, this may have a control unit 50 responsible for performing the steps of the method relating to the calculation of the second profile 12 previously introduced. Conversely, in a configuration in which the computerized system 5 also has a cloud platform 14, the following two alternatives may be provided. In a first case, the control unit 50 resides in the computing device 13 which is responsible for performing the steps relating to the calculation of the second profile 12, while the cloud platform 14 is used as a storage unit for the second profile 12 and as a data exchange interface between the robotic lawnmower 2 and the computing device 13. In an example, the measured coordinates of each characteristic point 4 may be transmitted from the robotic lawnmower 2 to the cloud platform 14 for storage, for example by associating such data with a user account, and the cloud platform 14 may communicate such information to the computing device 13 for calculation of the second profile 12. Dually, following the calculation of the second profile 12, the computing device 13 may transmit the information relating to the second profile 12 to the cloud platform 14 for storage, for example by associating such data with a user account, and the same cloud platform 14 may communicate the data relating to the second profile 12 to the robotic lawnmower 2 to proceed with the terrain maintenance operations.

In a second case, the control unit 50 resides in the cloud platform 14, which becomes responsible for performing the method steps. In this scenario, the computing device 13 has an exclusively user interface function to allow data entry and display. In this latter case, if it is necessary to communicate information between the robotic lawnmower 2 and the computing device 13, this transits through the cloud platform 14 to be processed and analyzed and then transmitted to the computing device 13 to allow its display to the user. In an example, the measured coordinates of each characteristic point 4 may be transmitted from the robotic lawnmower 2 to the cloud platform 14 for calculation of the second profile 12 and for storage associated with a user account. The cloud platform 14 may communicate such information to the computing device 13 for on-screen display via the user interface 30. Dually, following the calculation of the second profile 12, the cloud platform 14 may transmit the information relating to the second profile 12:

- to the mobile device for displaying the same second profile 12 (as, for example, shown in Figure 5);
- to the robotic lawnmower 2 to proceed with the terrain maintenance operations.

Considering the configurations introduced herein relating to the computing system, reference will generally be made in the continuation of the description to control unit 50 of the computerized system 5.

The control unit 50 of the computerized system 5 is responsible for receiving an image representative of the work area 1, for example from the camera of a drone, from satellite images, maps or other mapping services. Once the image has been received, the control unit 50 is also configured to receive from a user interface 30 of the computing device 13, data relating to the manual trace of the first profile 3 of the work area 1, further including data associated with at least one characteristic point 4 (see Figure 2). The control unit 50 of the computerized system 5 may be configured to store the profile manually traced by the user via the user interface 30 and optionally add it to a collection of first profiles of the work area 1 previously traced, or to receive a selection of data relating to a first profile 3 previously traced by the user.

As described previously, the step of determining the measured geographic coordinates of the at least one characteristic point 4 may be executed according to two alternatives.

In accordance with the first alternative, the step of tracing the first profile 3 may comprise a sub-step of marking the characteristic point 4, in which the user premarks one or more boundary points 6 as characteristic points 4 on the first profile 3. Subsequently, as shown in Figure 3, the computerized system 5, optionally the computing device 13, is configured to display, via the user interface 30, a message to instruct the user to position the robotic lawnmower 2 at the position relating to each characteristic point 4 in the work area 1. The user is therefore called upon to position the robotic lawnmower 2 at the position of the work area 1 where a respective characteristic point 4 is located and, once positioning has been completed, to confirm via the user interface 30 that they have performed such operation. Following the confirmation, the geolocation device 7 of the robotic lawnmower 2 is configured to generate a signal representative of geographic coordinates of the characteristic point 4, which is received by the controller 60 of the robotic lawnmower 2 to determine the measured geographic coordinates of the characteristic point 4 to be transmitted to the control unit 50 of the computerized system 5. The control unit 50 of the computerized system 5 is configured to receive, from the controller 60 of the robotic lawnmower 2, the measured geographic coordinates of the characteristic point 4, optionally for storage.

In accordance with the second alternative, the computerized system 5, optionally the computing device 13, is configured to display, via the user interface 30, a message to instruct the user to position the robotic lawnmower 2 at a distinctive position of the work area 1 corresponding to a boundary point 6 of the first profile 3. The user is therefore called upon to position the robotic lawnmower 2 at the position of the work area 1 where the boundary point 6 is located and, once positioning has been completed, to confirm via the user interface 30 that they have performed such operation. Following the confirmation, the geolocation device 7 of the robotic lawnmower 2 is configured to generate a signal representative of geographic coordinates of the boundary point 6, which is received by the controller 60 of the robotic lawnmower 2 to determine the measured geographic coordinates of the boundary point 6 to be transmitted to the control unit 50 of the computerized system 5. The control unit 50 of the computerized system 5 is configured to receive, from the controller 60 of the robotic lawnmower 2, the measured geographic coordinates of the boundary point 6, optionally for storage. Subsequently, the user indicates via the user interface 30 that such boundary point 6 is a characteristic point 4, associating the measured geographic coordinates with the characteristic point 4 thus marked. In this second alternative, the sub-step of marking the characteristic point 4 is therefore executed subsequent to the measurement of the geographic coordinates.

The control unit of the computerized system 5 may further assign to the characteristic point 4 the geographic coordinates measured via the geolocation system if the image representative of the work area 1 is an aerial photograph devoid of geolocation information.

In this configuration, the geographic coordinates of the boundary points 6 of the second profile 12 are derived keeping unchanged the relative positions between the characteristic point 4 and the boundary points 6 defined in the first profile 3. The distances and directions originally defined on the first profile 3 are preserved and applied to the measured geographic coordinates of the characteristic point 4 to calculate the actual geographic coordinates of each boundary point 6.

Alternatively, if the image representative of the work area 1 is a satellite image or a map provided through a mapping service, then the control unit 50 of the computerized system 5 may be configured to calculate, according to the previously described modalities, an offset value between the estimated geographic coordinates (those deriving from the initial image) and the measured ones (detected by the robot) to determine the second profile 12 of the work area 1.

Following the calculation of the second profile 12, the control unit of the computerized system 5 may be configured to display the second profile via the user interface 30 of the same computerized system 5 (see Figure 5) and to transmit the same second profile to the robotic lawnmower 2 to be used as reference during maintenance operations on the work area 1. The controller 60 of the robotic lawnmower 2 may therefore be configured to receive the second profile 12 from the control unit 50 of the computerized system 5 and store it in a local memory unit.

In a further embodiment, the steps of the method for calculating the second profile 12, previously described as executed by the control unit 50 of the computerized system 5, whether this is located on the computing device 13 or on the cloud platform 14, may be executed directly by the controller 60 of the robotic lawnmower 2. In this configuration, the controller 60 of the robotic lawnmower 2 is configured to autonomously calculate the second profile 12 based on the measured geographic coordinates of the at least one characteristic point 4, detected via the geolocation device 7 of the robotic lawnmower 2. The computerized system 5, optionally the computing device 13, in this case serves as interface for the user and allows receiving the data relating to the first profile 3 traced by the user and displaying the second profile 12 calculated by the controller 60 of the robotic lawnmower 2.

## Claims

1. Method performed by a computerized system (5), for defining a profile of a work area in which a robotic lawnmower (2) operates, said method performing a mapping procedure comprising the steps of:

   - acquiring or receiving, optionally from a database, an image representative of the work area (1) in which the robotic lawnmower (2) operates,
   - defining or selecting a first profile (3) of the work area (1) on said image, on said first profile (3) being identified or identifiable at least one characteristic point (4) relative to a distinctive position of the work area (1),
   - determining, by means of a geolocation system optionally of the robotic lawnmower (2), or receiving measured geographic coordinates of the at least one characteristic point (4),
   - determining based on the first profile (3) and the measured geographic coordinates of the at least one characteristic point (4), a second profile (12) of the work area (1) usable by the robotic lawnmower (2) as a reference during navigation of the work area (1).

2. Method according to the preceding claim, wherein the step of defining or selecting the first profile (3) of the work area (1) comprises manually delineating, via a user interface of the computerized system (5), a trace representative of:

   - a perimeter edge (3a) relative to an external boundary of the work area (1), and/or
   - one or more internal edges (3b) that delimit respective zones of the work area (1), distinct from the perimeter edge (3a) and internal thereto,

   wherein defining or selecting the first profile (3) of the work area (1) comprises:

   - selecting or marking a plurality of boundary points (6) representative of respective positions of the work area (1),
   - delineating a closed path that connects each boundary point (6) and the characteristic point (4) to one another, wherein defining or selecting the first profile (3) of the work area (1) further comprises a step of manually selecting or marking, via a/the user interface of the computerized system (5), the at least one characteristic point (4) of the first profile (3).

3. Method according to any one of the preceding claims, wherein the mapping procedure comprises assigning to the characteristic point (4) the geographic coordinates measured via the geolocation system, or

   wherein the first profile (3) comprises information relating to an estimate of geographic coordinates of the characteristic point (4) which can be derived from the image representative of the work area (1),
   wherein the mapping procedure further comprises a step of:

   - calculating an offset value as a difference between the measured geographic coordinates of the characteristic point (4) and the estimated geographic coordinates of the characteristic point (4),

   wherein the step of determining the second profile (12) comprises translating the first profile (3) as a function of the offset value and the characteristic point (4), said second profile (12) comprising information relating to geographic coordinates of the characteristic point (4) taking into account the offset value,
   wherein translating the first profile (3) comprises adding the offset value to the estimated geographic coordinates of the same characteristic point (4) and optionally to respective estimated geographic coordinates of each boundary point (6),
   optionally wherein the estimated geographic coordinates of the characteristic point (4) are determined by respective estimated values of latitude ($Lat_s$) and longitude ($Long_s$),
   wherein the measured geographic coordinates of the characteristic point (4) are determined by respective measured values of latitude ($Lat_m$) and longitude ($Long_m$),
wherein the offset value is representative of respective geographic coordinates determined by respective values of latitude ($Lat_{offset}$) and longitude ($Long_{offset}$),
wherein calculating a difference between the measured geographic coordinates of the characteristic point (4) and the estimated geographic coordinates of the characteristic point (4) comprises:

- determining the latitude value ($Lat_{offset}$) of the offset value as the difference between the measured latitude value ($Lat_m$) and the estimated latitude value ($Lat_s$) of the characteristic point (4),
- determining the longitude value ($Long_{offset}$) of the offset value as the difference between the measured longitude value ($Long_m$) and the estimated longitude value ($Long_s$) of the characteristic point (4),

wherein said latitude value ($Lat_{offset}$) of the offset value is determined using the following formula:

$$Lat_{offset} = Lat_m - Lat_s \ ,$$

wherein said longitude value ($Long_{offset}$) of the offset value is determined using the following formula:

$$Long_{offset} = Long_m - Long_s \ .$$

**4.** Method according to any one of the preceding claims, wherein the robotic lawnmower (2) has a geolocation device (7),

wherein determining the measured geographic coordinates of the characteristic point (4) comprises:

- placing the robotic lawnmower (2) at the position of the work area (1) coinciding with the characteristic point (4),
- determining the measured geographic coordinates of the characteristic point (4) via the geolocation device (7) of the robotic lawnmower (2),

wherein placing the robotic lawnmower (2) at the position of the work area (1) coinciding with the characteristic point (4) comprises:

- aligning a reference zone (10) of the robotic lawnmower (2) defined by a midpoint between two wheels of the same robotic lawnmower (2), with the position of the work area (1) coinciding with the characteristic point (4),

optionally wherein said reference zone (10) of the robotic lawnmower (2) is located on an axle that connects two wheels (11) of the robotic lawnmower (2) to each other,
wherein the mapping procedure further comprises a step of determining or retrieving, optionally from a memory unit of the robotic lawnmower (2), a positional deviation value representative of a distance between the reference zone (10) and a position of the geolocation device (7) on the robotic lawnmower (2),
wherein determining the measured geographic coordinates of the characteristic point (4) is a function of the positional deviation value,
wherein the positional deviation value is defined by cartesian coordinates calculated with respect to a cartesian reference system having the reference zone (10) as its origin,
wherein determining the measured geographic coordinates of the characteristic point (4) comprises adding the positional deviation value to geographic coordinates detected by the geolocation device (7) of the robotic lawnmower (2).

**5.** Method according to any one of the preceding claims when dependent on claim 2, wherein the image representative of the work area (1) has, for each boundary point (6), information relating to respective estimates of geographic coordinates defined as:

- absolute-type estimated geographic coordinates, which identify respective positions of the work area (1) independently of the estimated geographic coordinates of the characteristic point (4), or
- relative-type estimated geographic coordinates, which identify respective positions of the work area (1) in relation to the estimated geographic coordinates of the characteristic point (4),

wherein if the image representative of the work area (1) has, for each boundary point (6), information relating to absolute-type geographic coordinates, the step of translating the first profile (3) comprises adding the offset value to respective absolute-type estimated geographic coordinates of each boundary point (6).

**6.** Method according to any one of the preceding claims, wherein the step of defining or selecting the profile of the work area (1) is performed before or after the step of determining the measured geographic coordinates of the characteristic point (4),

wherein the step of determining the measured geographic coordinates of the characteristic point (4) is performed before or after a step of identifying the at least one characteristic point (4).

7. Method according to any one of the preceding claims when dependent on claims 2 and 3, wherein on said first profile (3) are identified or identifiable a plurality of characteristic points relative to respective distinctive positions of the work area (1),
wherein the mapping procedure comprises the steps of:

- determining, by means of the geolocation system optionally of the robotic lawnmower (2), measured geographic coordinates of each characteristic point (4) of said plurality,
- calculating, for each characteristic point (4), a characteristic deviation value as the difference between the measured geographic coordinates of a respective characteristic point (4) and the estimated geographic coordinates of the same characteristic point (4),
- calculating the offset value as the arithmetic mean of the deviation values,
- determining the second profile (12) based on the offset value.

8. Method according to any one of the preceding claims, wherein the robotic lawnmower (2) is configured to communicate with a reference station (9) positioned within or in proximity to the work area (1), said reference station (9) having a respective geolocation device (8),
wherein the method further comprises a step of executing the mapping procedure periodically or whenever a displacement of the reference station (9) is detected.

9. Computerized infrastructure configured to perform the method according to any one of the preceding claims, said infrastructure comprising:

- a computerized system (5) comprising a control unit (50) configured to:

- acquiring or receiving, optionally from a database, an image representative of a work area (1),
- receiving a first profile (3) of the work area (1) on said image, on said first profile (3) being identified or identifiable at least one characteristic point (4) relative to a distinctive position of the work area (1),
- receiving, from a geolocation system, measured geographic coordinates of at least one characteristic point (4),

- a robotic lawnmower (2) comprising a controller (60) connected to the computerized system (5) and configured to receive or determining a second profile (12) of the work area (1) obtained from the first profile (3) and the measured geographic coordinates of the at least one characteristic point (4), said second profile (12) being usable by the robotic lawnmower (2) as a reference during navigation of the work area (1).

10. Computerized infrastructure according to the preceding claim, wherein the control unit (50) of the computerized system (5) is configured to:

- determining the second profile (12) of the work area (1) based on the first profile (3) and the measured geographic coordinates of the at least one characteristic point (4),
- transmitting the second profile (12) to the controller (60) of the robotic lawnmower (2),

wherein the controller (60) of the robotic lawnmower (2) is configured to receive the second profile (12) from the control unit (50) of the computerized system (5).

11. Computerized infrastructure according to any one of the two preceding claims, wherein the robotic lawnmower (2) comprises a geolocation device (7) configured to generate a signal representative of geographic coordinates of the characteristic point (4),

wherein the controller (60) of the robotic lawnmower (2) is connected to the geolocation device (7) and configured to:

- receiving the signal representative of geographic coordinates of the characteristic point (4),
- determining measured geographic coordinates of the characteristic point (4) based on the signal received from the geolocation device (7),
- transmitting the measured geographic coordinates of the characteristic point (4) to the control unit (50) of the computerized system (5),

wherein the control unit of the computerized system (5) is configured to:

- assigning to the characteristic point (4) the geographic coordinates measured via the geolocation system, or

wherein the first profile (3) comprises information relating to an estimate of geographic coordinates of the characteristic point (4) derivable from the image representative of the work area (1), said control unit (50) of the computerized system (5) is configured to:

- calculating an offset value as a difference between the measured geographic coordinates of the characteristic point (4) and the estimated geographic coordinates of the characteristic point (4),
- determining the second profile (12) of the work area (1) by translating the first profile (3) as a function of the offset value and the characteristic point (4).

**12.** Computerized system (5) for defining a profile of a work area (1) in which a robotic lawnmower (2) operates, said computerized system (5) comprising a control unit (50) configured to perform the method according to any one of the preceding claims from 1 to 8.

**13.** Computerized system according to the preceding claim, wherein the control unit (50) of the computerized system (5) is configured to determine the second profile (12) of the work area (1) based on the first profile (3) and the measured geographic coordinates of the at least one characteristic point (4),

wherein the computerized system comprises a user interface (30) configured to allow a user to select or manually trace the profile of the work area (1),
wherein the control unit of the computerized system (5) is connected to the user interface (30) and comprises a memory configured to storing:

- a plurality of first profiles of the work area (1) selectable by the user, and/or
- the first profile (3) manually traced by the user via the user interface (30).

wherein the control unit is configured to:

- assigning to the characteristic point (4) the measured geographic coordinates via the geolocation system, or

wherein the first profile (3) comprises information relating to an estimate of geographic coordinates of the characteristic point (4) derivable from the image representative of the work area (1), said control unit being configured to:

- calculating an offset value as a difference between the measured geographic coordinates of the characteristic point (4) and the estimated geographic coordinates of the characteristic point (4),
- determining the second profile (12) of the work area (1) by translating the first profile (3) as a function of the offset value and the characteristic point (4).

**14.** Robotic lawnmower (2) configured to cooperate with the computerized system according to any one of the two preceding claims, comprising a controller (60) connected to the computerized system (5) and configured to receive or calculate a second profile (12) of the work area (1) obtained starting from the first profile (3) and from the measured geographic coordinates of the at least one characteristic point (4), said the second profile (12) being usable by the robotic lawnmower (2) as a reference during navigation in the work area (1).

**15.** Robotic lawnmower according to the preceding claim, wherein the controller (60) is configured to receive the second profile (12) from the control unit (50) of the computerized system (5).

wherein the robot comprises a geolocation device (7) configured to generate a signal representative of geographic coordinates of the characteristic point (4),
wherein the controller (60) is connected to the geolocation device (7) and configured to:

- receiving the signal representative of geographic coordinates of the characteristic point (4),
- determining measured geographic coordinates of the characteristic point (4) based on the signal received from the geolocation device (7),
- transmitting the measured geographic coordinates of the characteristic point (4) to the control unit (50) of the computerized system (5).

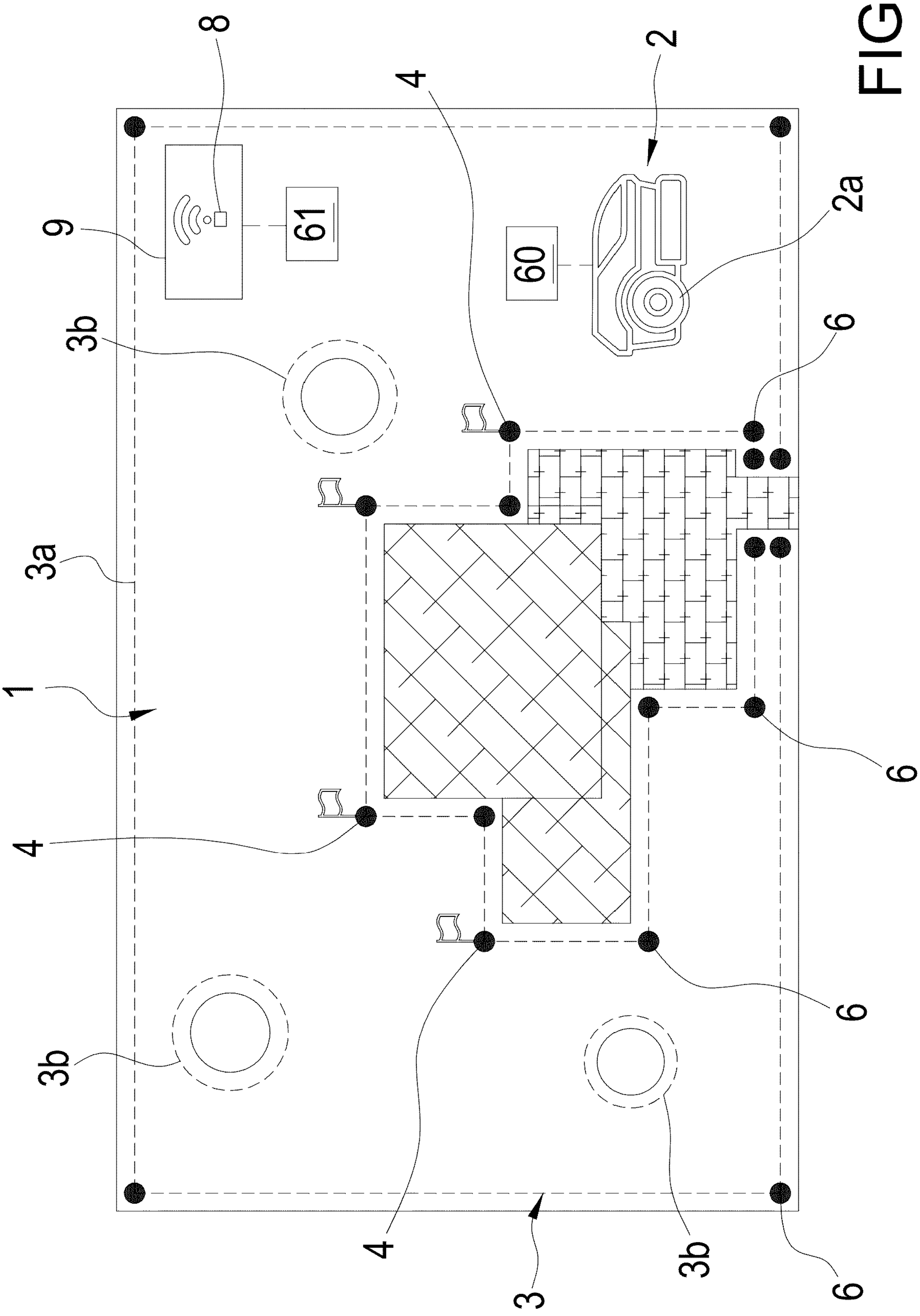


FIG. 1

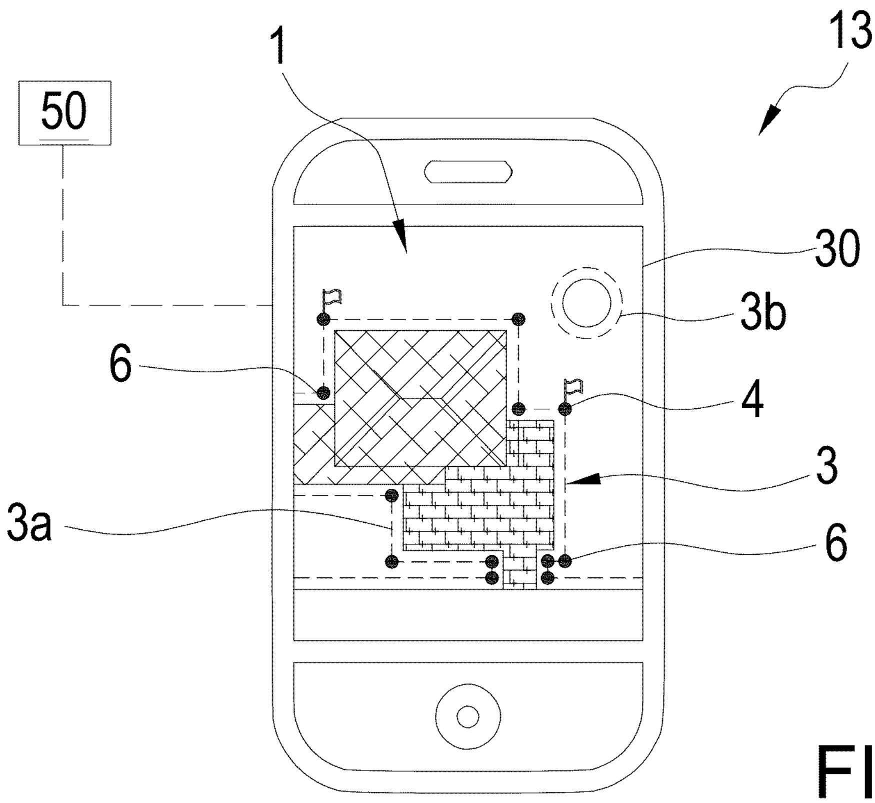


FIG. 2

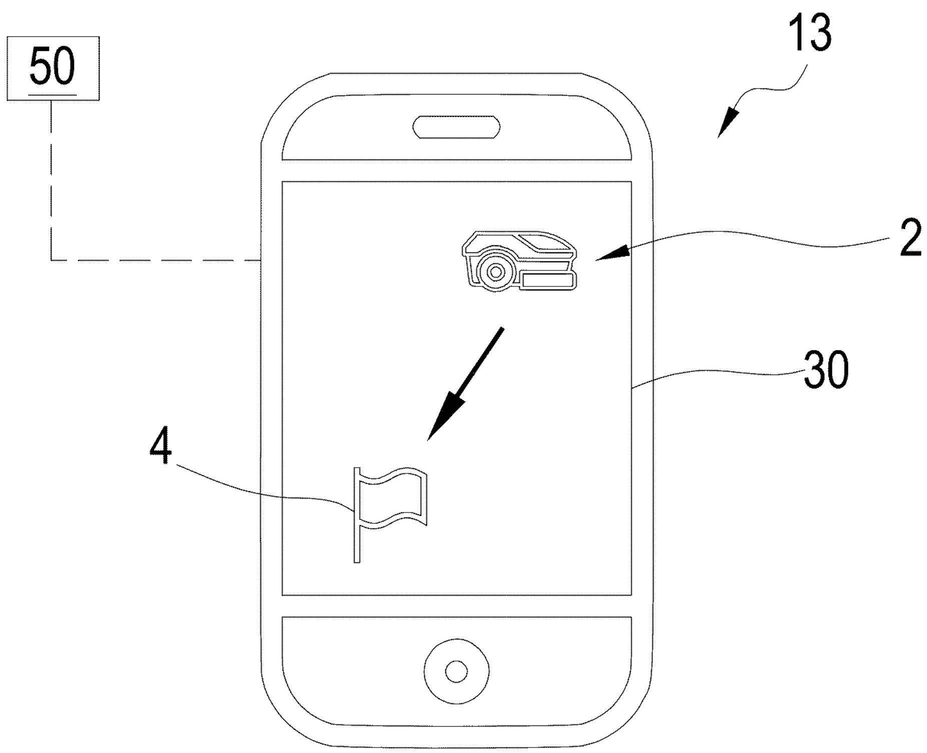


FIG. 3

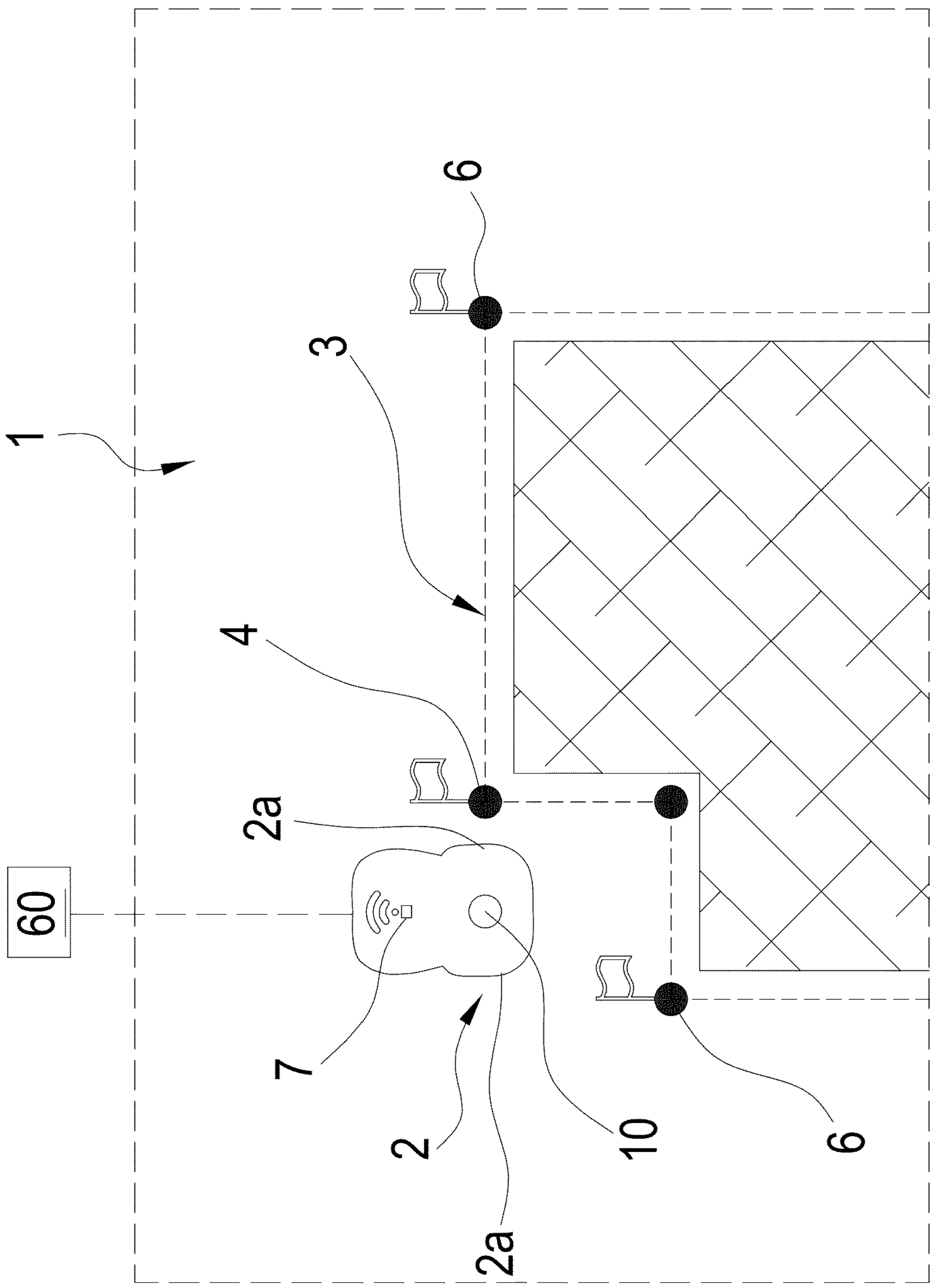


FIG. 4

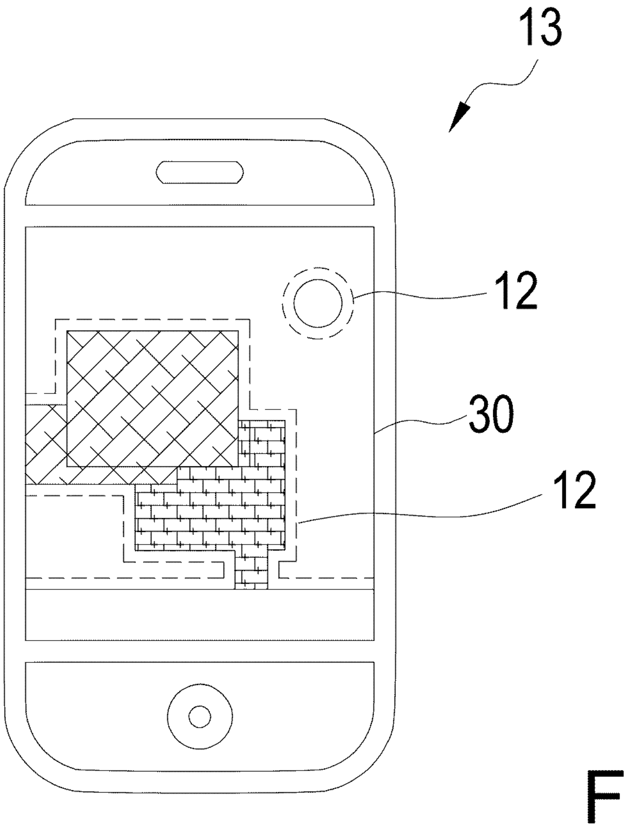


FIG. 5

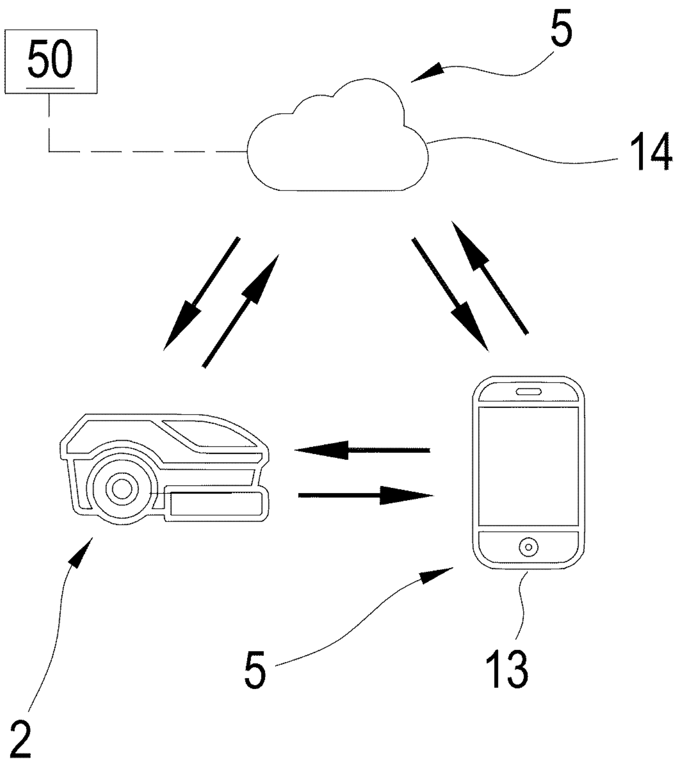


FIG. 6

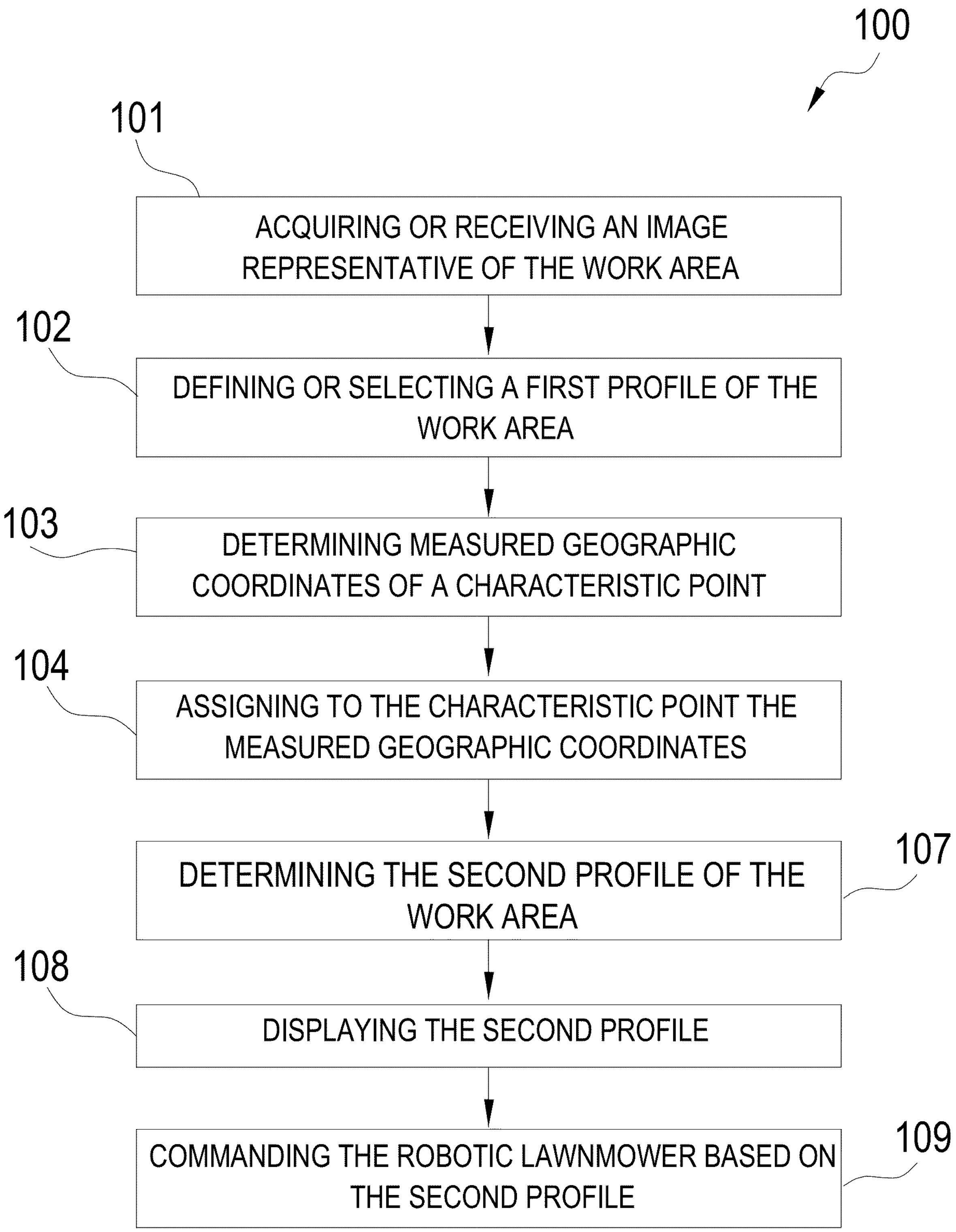

100
101
ACQUIRING OR RECEIVING AN IMAGE REPRESENTATIVE OF THE WORK AREA
102
DEFINING OR SELECTING A FIRST PROFILE OF THE WORK AREA
103
DETERMINING MEASURED GEOGRAPHIC COORDINATES OF A CHARACTERISTIC POINT
104
ASSIGNING TO THE CHARACTERISTIC POINT THE MEASURED GEOGRAPHIC COORDINATES
DETERMINING THE SECOND PROFILE OF THE WORK AREA
107
108
DISPLAYING THE SECOND PROFILE
COMMANDING THE ROBOTIC LAWNMOWER BASED ON THE SECOND PROFILE
109


FIG. 7

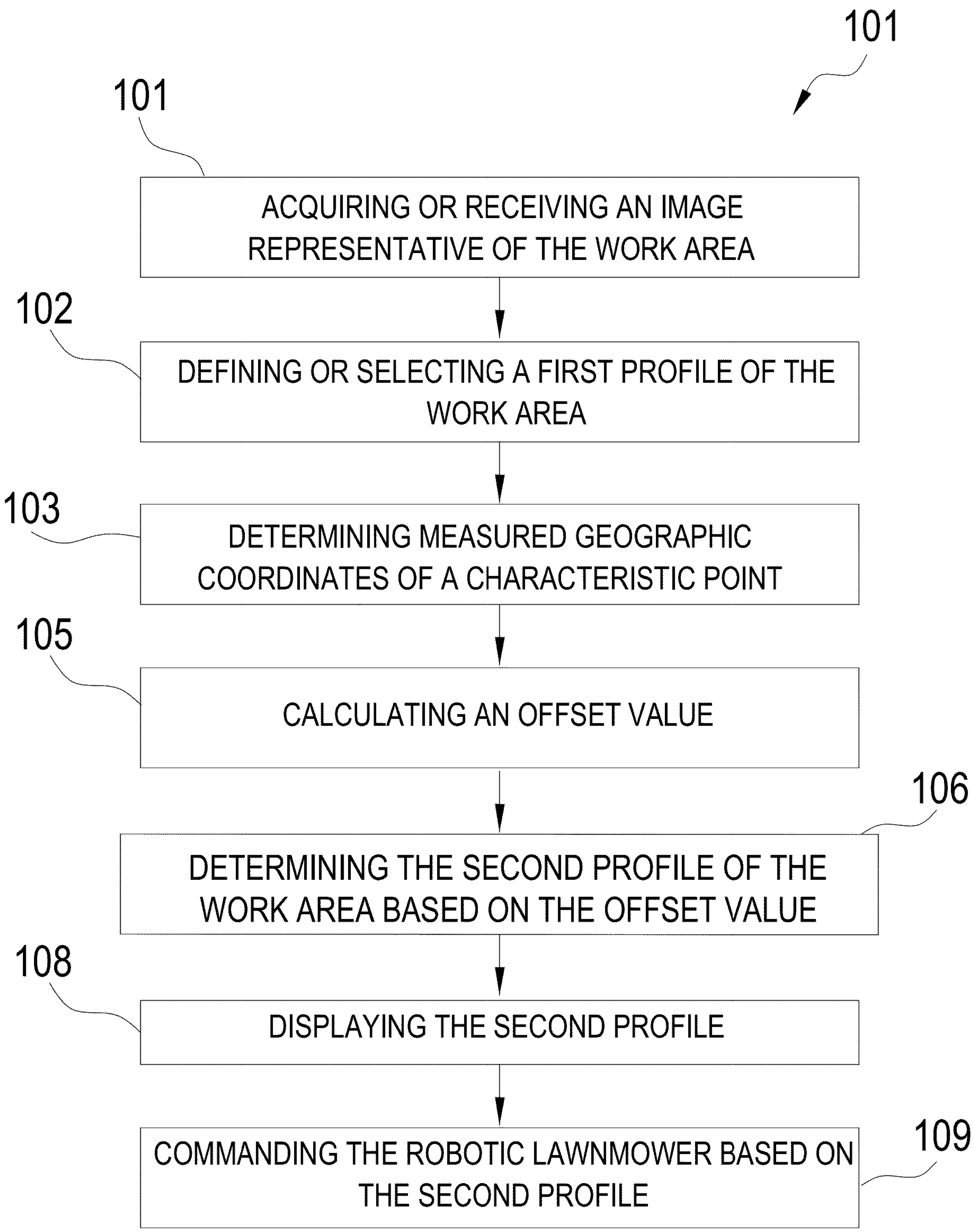
101
101
ACQUIRING OR RECEIVING AN IMAGE REPRESENTATIVE OF THE WORK AREA
102
DEFINING OR SELECTING A FIRST PROFILE OF THE WORK AREA
103
DETERMINING MEASURED GEOGRAPHIC COORDINATES OF A CHARACTERISTIC POINT
105
CALCULATING AN OFFSET VALUE
106
DETERMINING THE SECOND PROFILE OF THE WORK AREA BASED ON THE OFFSET VALUE
108
DISPLAYING THE SECOND PROFILE
109
COMMANDING THE ROBOTIC LAWNMOWER BASED ON THE SECOND PROFILE

FIG. 8

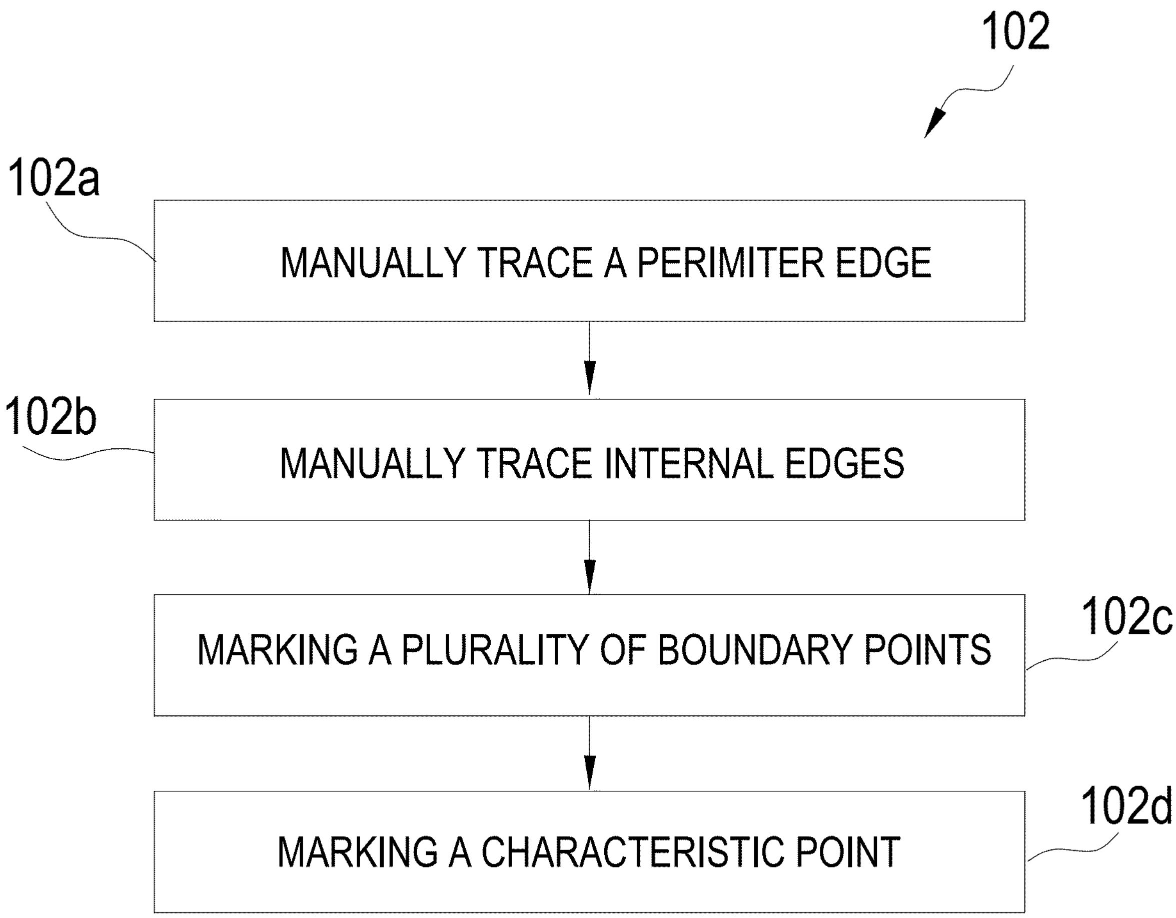
102
102a
MANUALLY TRACE A PERIMITER EDGE
102b
MANUALLY TRACE INTERNAL EDGES
MARKING A PLURALITY OF BOUNDARY POINTS
102c
MARKING A CHARACTERISTIC POINT
102d

FIG. 9

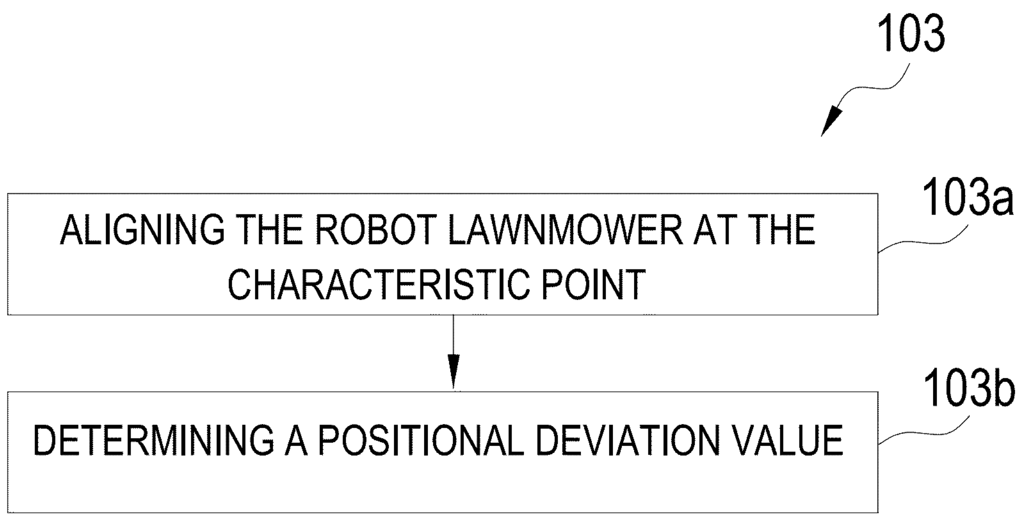
103
ALIGNING THE ROBOT LAWNMOWER AT THE CHARACTERISTIC POINT
103a
DETERMINING A POSITIONAL DEVIATION VALUE
103b

FIG. 10

Europäisches Patentamt
European Patent Office
Office européen des brevets

# EUROPEAN SEARCH REPORT

Application Number
EP 26 15 5830

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 761 141 B1 (STIGA S P A IN BREVE ANCHE ST S P A [IT]) 15 February 2023 (2023-02-15) | 1,3,5-15 | INV. G05D1/20 |
| Y | * paragraph [0035] - paragraph [0096] * | 2 | |
| A | | 4 | |
| | ----- | | |
| X | US 2018/255704 A1 (KAMFORS MATTIAS [SE] ET AL) 13 September 2018 (2018-09-13) * paragraph [0031] - paragraph [0064] * | 1,9,12 | |
| | ----- | | |
| Y | US 2021/018927 A1 (ACKERMAN CHAD A [US] ET AL) 21 January 2021 (2021-01-21) | 2 | |
| A | * paragraph [0040] - paragraph [0114] * | 1,3,5-15 | |
| | ----- | | |

TECHNICAL FIELDS SEARCHED (IPC)

G05D

The present search report has been drawn up for all claims

1

| Place of search | Date of completion of the search | Examiner |
|---|---|---|
| Munich | 9 February 2026 | Coda, Ruggero |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 26 15 5830

This annex lists the patent family members relating to the patent documents cited in the above-mentioned European search report. The members are as contained in the European Patent Office EDP file on
The European Patent Office is in no way liable for these particulars which are merely given for the purpose of information.

09-02-2026

| Patent document cited in search report | Publication date | Patent family member(s) | Publication date |
|---|---|---|---|
| EP 3761141 B1 | 15-02-2023 | EP 3761141 A2 | 06-01-2021 |
| | | EP 3958082 A1 | 23-02-2022 |
| US 2018255704 A1 | 13-09-2018 | US 2018255704 A1 | 13-09-2018 |
| | | WO 2016103066 A1 | 30-06-2016 |
| US 2021018927 A1 | 21-01-2021 | EP 3767420 A1 | 20-01-2021 |
| | | US 2021018927 A1 | 21-01-2021 |

EPO FORM P0459

For more details about this annex : see Official Journal of the European Patent Office, No. 12/82